# EUROPÄISCHE PATENTSCHRIFT

(11) **EP 2 930 548 B1**
(45) Veröffentlichungstag und Bekanntmachung des Hinweises auf die Patenterteilung: **01.08.2018**
(21) Anmeldenummer: 15162308.9
(22) Anmeldetag: 02.04.2015
(51) Int. Cl.: G02B 21/00

(54) **EINRICHTUNG FÜR MIKROSKOPISCHE ANWENDUNGEN**
DEVICE FOR MICROSCOPIC APPLICATIONS
DISPOSITIF POUR APPLICATIONS MICROSCOPIQUES

(30) Priorität: 10.04.2014 DE 102014005309
(43) Veröffentlichungstag der Anmeldung: 14.10.2015
(73) Patentinhaber: Carl Zeiss Microscopy GmbH, 07745 Jena (DE)
(72) Erfinder: Wald, Matthias, 07751 Jena (DE); Shi, Renhu, 37085 Göttingen (DE); Scheps, Alexander, 37139 Adelebsen (DE); Schadwinkel, Harald, 30161 Hannover (DE); Schaffer, Jörg, 37085 Göttingen (DE)
(74) Vertreter: Breit, Ulrich

(56) Entgegenhaltungen:
- WO-A2-00/43819
- DE-A1- 19 511 937
- DE-A1- 19 835 073
- US-A- 4 850 686
- US-A- 5 022 743
- US-A- 5 861 984

## Beschreibung

Die Erfindung betrifft ein Mikroskopsystem gemäß dem Oberbegriff des Anspruchs 1.

In DE 195 11 937 A1 wird eine solche Anordnung beschrieben, die im Strahlengang das Strukturelement nicht-reflektierend ausbildet und schräg stellt, um störende Reflexe zu vermeiden. Das Strukturelement steht unter einem Winkel im Strahlengang, der bewirkt, dass Reflexe von Probenlicht in einen Raumwinkel gelenkt wird, der nicht zum detektierten Signal beiträgt. Ferner beinhaltet die Anordnung ein Prismenpaar, wobei ein Prisma entlang des Strahlverlaufes direkt vor dem Strukturelement liegt und ein Prisma direkt nach dem Strukturelement angeordnet ist. Die Prismen sind so platziert, das Reflexe des Probenlichts ebenso in den genannten Raumwinkel gelangen. Die Prismenanordnung ist integraler Bestandteil des Abbildungssystems (Imaging-Moduls), beziehungsweise der Tubuseinheit. Ein erheblicher Nachteil ist die durch die geometrische Anordnung der Prismen bedingte und für die vorliegende Anwendung ungenügende Abbildungsqualität. Die hauptsächlichen Fehler sind dabei Astigmatismus und Farbquerfehler.

Bekannt sind weiter konfokale Mikroskope, bei denen eine punktförmige Lichtquelle auf ein Objekt abgebildet wird oder ein in einer dem Objektfeld konjugierten Ebene befindliches, kreisförmiges sowie drehbares Strukturelement mit beispielweise Löchern, Gitterlinien oder andere beliebigen Strukturen (spinning disk) auf das Objekt abgebildet wird. Das am Objekt reflektierte oder durch die Beleuchtung hervorgerufene Fluoreszenzlicht fällt auf dem Rückweg wiederum auf das Strukturelement fällt. Durch eine auf dem Strukturelement befindliche reflektierende, musterartig ausgebildete, teiltransmittierende Schicht wirkt das Strukturelement als Strahlteiler. Ein solcher Aufbau ist aus der WO 00/43819 bekannt. Typischerweise wird die Schicht durch eine Metallbedampfung, beispielsweise unter Verwendung von Chrom, Silber, Gold oder Aluminium, hergestellt. Die Metallschicht ist hochreflektiv, während die Lücken in der Struktur hochtransmittierend sind. Um das transmittierte Licht für die Bildgebung weiterzuverwenden, wird das Strukturelement unter einem hinreichenden Winkel zur optischen Achse des Mikroskopsystems in die Zwischenbildebene gestellt, so dass das reflektierte Strahlenbündel vom transmittierten Strahlenbündel separiert weitergeleitet werden kann.

Als wesentlichen Nachteil des schief angeordneten Strukturelementes erkannten die Erfinder, dass die Struktur auf das Objekt auch schief abgebildet wird, also die Objektebene und die Ebene des Strukturelementes in einen Winkel zueinander stehen. Im Objektraum ist der resultierende Winkel zwischen diesen Ebenen abhängig von der durch die Mikroskopoptik bewirkten Vergrößerung. Der Effekt ist dabei, dass die Struktur im Objektfeld nicht gleichförmig wirkt und in Abhängigkeit vom Abbildungsmaßstab unterschiedlich ist. Als weiteren Nachteil stellten sie fest, dass je nach der Größe des Winkels die Schieflage des Strukturelementes die Tiefenschärfe der Abbildung die Wirkung des abgebildeten Struktur nicht mehr für das gesamte Objektfeld vermittelt, sondern nur für einen Teil des Objektfeldes, für den sich das Strukturelement noch in der Tiefenschärfe des optisches Systems befindet. Daraus resultierend wird nicht die Objektebene, sondern eine im Winkel dazu befindliche Ebene abgebildet. Ein Nebeneffekt ist die laterale Vergrößerungsänderung über das Bildfeld, von Bildrand zu Bildrand, beziehungsweise ein Trapezeffekt.

Ausgehend hiervon liegt der Erfindung die Aufgabe zugrunde, ein gattungsgemäßes Mikroskopsystem dahingehend weiterzubilden, dass in Reflexion und Transmission das volle Sehfeld bei voller numerischer Apertur auf die Detektoren übertragen wird.

Die Erfindung ist im Anspruch 1 definiert. Eine vorteilhafte Ausgestaltung ist im abhängigen Anspruch angegeben.

An der Schnittstelle zwischen dem Mikroskop und dem Bildverarbeitungsmodul (imaging module) ist ein optischer Adapter angeordnet, der das mikroskopische Zwischenbild auf die Bildebene des als Strahlteiler wirkenden Strukturelementes kippt.

Dabei benötigen das Mikroskop sowie das imaging module keine Änderung ihrer internen Optik, das heißt der Strahlengang vor und nach dem optischen Adapter im Mikroskop und imaging module bleibt unverändert.

Die Anordnung des optischen Adapters erzeugt eine hohe Abbildungsgüte (Strehl'sche Definitionshelligkeit). Der optische Adapter ist als Prismenanordnung ausgebildet.

In einer vorteilhaften Ausgestaltung beträgt der Knickwinkel an der Schnittstelle zwischen dem Mikroskop und dem imaging module bei einer Kippung der Bildebene um 8 Grad etwa 4,5 Grad. Wird darauf verzichtet, das gesamte Sehfeld innerhalb einer Tiefenschärfe längs der Orientierung des Strukturelementes auszurichten, können auch andere Winkel eingestellt werden, die eventuelle Randbedingungen besser bedienen, beispielsweise baulicher Natur. Es ist auch denkbar, dass der Winkel von der Fertigbarkeit der Prismen, der Glasauswahl und zulässiger Toleranzen abhängt.

Die Erfindung soll nachfolgend anhand eines Ausführungsbeispiels näher erläutert werden. Dazu zeigen:
- Figur 1: eine schematische, vereinfachte Darstellung der Einrichtung,
- Figur 2: eine schematische Darstellung der Strahlengänge des Mikroskops und des imaging module und deren Kopplung,
- Figur 3: eine schematische Darstellung der Objektfeldgröße und der Bildgröße,
- Figur 4: eine schematische Darstellung des optischen Adapters und
- Figur 5: eine vergrößerte Darstellung des optischen Adapters.

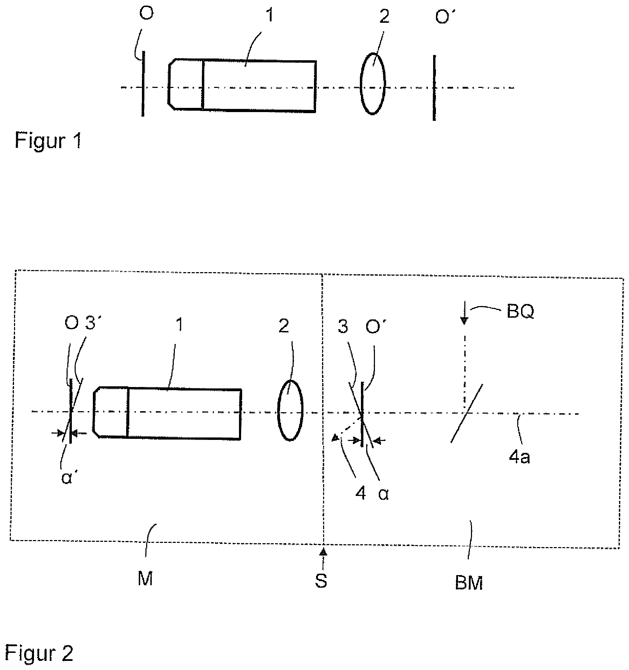

Ausgehend von Figur 1, in der schematisch ein Mikroskop M mit einer Objektebene O, einem Objektiv 1, einer Tubuslinse 2 und einer Bildebene O' dargestellt ist, zeigt Figur 2 die Ankopplung dieses Mikroskops an ein imaging module BM. Die Schnittstelle S zwischen dem Mikroskop M und dem imaging module BM befindet sich dabei zwischen der Tubuslinse 2 und der Bildebene O' des Mikroskops M.

Am Ort der Bildebene O' ist unter einem Kippwinkel α zur Bildebene O' ein Strukturelement (Spinning Disk) 3 angeordnet, dessen Bild 3' über den transmittierenden Anteil des von einer Beleuchtungsquelle BQ ausgehenden Lichtanteils in der Objektebene O unter dem durch den Maßstab des optischen Systems modifizierten, entgegengesetzten Kippwinkel α' zu sehen ist. Ferner ist der vom Strukturelement 3 reflektierte Lichtanteil 4 und der transmittierte Lichtanteil 4a dargestellt.

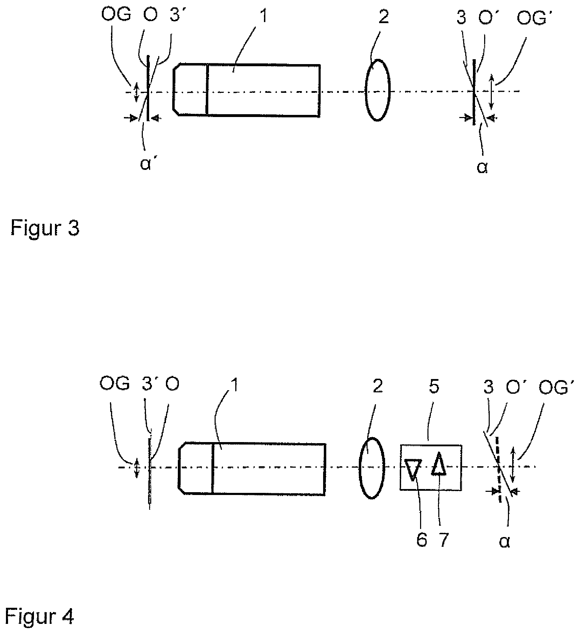

Figur 3 zeigt neben der Anordnung des Strukturelementes 3 in der Bildebene O' und dessen Bild 3' in der Objektebene O die Größe des Objektfeldes OG in der Objektebene O im Vergleich zur Größe des Bildes OG' (konjugiertes Bild des Objektfeldes OG) in der Bildebene O'.

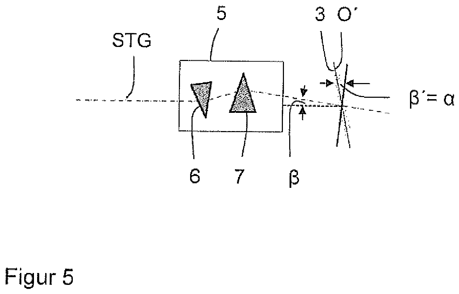

In Figur 4 ist die Anordnung des optischen Adapters 5 mit einer Prismenanordnung, bestehend aus zwei Prismen 6 und 7, dargestellt. Der optische Adapter 5 befindet sich dabei zwischen der Tubuslinse 2 und der Bildebene O'. Der optische Adapter 5 bewirkt, dass das Bild 3' des Strukturelementes 3 nicht mehr unter dem Kippwinkel α' zur Objektebene O steht, sondern direkt in die Objektebene O fällt. Der Strahlengang STG wird durch die Anordnung der Prismen 6 und 7 um einen Winkel β umgelenkt, was in Figur 5 näher dargestellt ist.

Wie bereits ausgeführt, zeigt Figur 5 die detailliertere Ansicht des optischen Adapters 5, durch den es mittels der Prismen 6 und 7 zu einer Knickung des Strahlenganges STG um einen Winkel β und zu einer Kippung der Bildebene O' relativ zur neuen Lage des Strahlenganges STG um einen Winkel α=β' kommt.

Dabei erfolgt mittels des Prismas 7 eine Kompensation der Wirkung des Prismas 6 bezüglich Koma und Farbquerfehler, aber nicht bezüglich der Bildebenenkippung. Das ist möglich, da die Kippung der Bildebene O' nicht von der axialen Position der Prismen 6 und 7 oder deren Abstand, sondern nur von deren Ablenkwinkel bedingt ist. Koma und Farbquerfehler reagieren hingegen deutlich auch auf die Position der beiden Prismen 6 und 7. Somit kann eine Kippung der Bildebene O' erzeugt werden, ohne dass dabei Koma und Farbquerfehler erzeugt wird, und zwar über den Abstand der beiden Prismen 6 und 7 zueinander und über den Abstand zur Bildebene O' selbst. Andere Aberrationen sind bei dem Aufbau ohnehin klein und in der Betrachtung vernachlässigbar.

Bei einem Knickwinkel β von 4,5 Grad ergibt sich eine Kippung der Bildebene O' um den Kippwinkel β' von 8 Grad.

Der Knickwinkel β lässt sich beeinflussen unter Kompromissbildung der erzeugten Lageveränderung der Bildebene um den Kippwinkel β' oder der Abbildungsgüte (Aberrationen).

## Patentansprüche

1. Mikroskopsystem, umfassend
- ein Mikroskop (M) mit einem Objektiv (1) und einer Tubuslinse (2) zur Abbildung eines Objekts von einer Objektebene (O) längs einer optischen Achse (STG) in ein Zwischenbild, das in einer Zwischenbildebene (O') liegt,
- ein bildgebendes Modul (BM),
-- das ein Spinning-Disk-Strukturelement (3) mit transmittierenden Strukturen aufweist, welches am Ort der Zwischenbildebene (O') angeordnet ist und unter einem Kippwinkel (α) zur Senkrechten des Strahlenganges (STG) gestellt ist,
-- das zum Lenken von Beleuchtungslicht durch das Spinning-Disk-Strukturelement (3) ausgebildet ist, um in der Objektebene (O) ein Bild (3') der Spinning-Disk-Strukturelements (3) zu erzeugen, und
-- das zum Erfassen von transmittiertem Probenlicht (4a), das an den transmittierenden Strukturen des Spinning-Disk-Strukturelements (3) transmittiert ist, ausgebildet ist, wobei das Probenlicht (4a) am Objekt reflektierte Beleuchtungsstrahlung oder von durch die Beleuchtungsstrahlung hervorgerufene Fluoreszenzstrahlung ist, und
- eine zwischen der Tubuslinse (2) und dem Spinning-Disk-Strukturelement (3) angeordnete Prismenanordnung (5),
**dadurch gekennzeichnet, dass**
- das Spinning-Disk-Strukturelement (3) reflektierende Strukturen aufweist, so dass es als Strahlteiler wirkt,
- das bildgebende Modul (BM) zum Erfassen von reflektiertem Probenlicht (4), das an den reflektierenden Strukturen des Spinning-Disk-Strukturelements (3) reflektiert ist, ausgebildet ist,
- die Prismenanordnung (5) zwischen der Tubuslinse (2) und dem Spinning-Disk-Strukturelement (3) angeordnet ist und das Zwischenbild auf die Ebene des Strukturelementes (3) kippt und so zwischen der Tubuslinse (2) und dem Spinning-Disk-Strukturelement (3) angeordnet ist, dass mittels des als Strahlteiler wirkenden Strukturelementes (3) das reflektierte Probenlicht (4) im bildgebenden Modul (BM) erfassbar ist,
- die Prismenanordnung (5) ein erstes Prisma (6) und ein zweites Prisma (7) umfasst, wobei die optische Achse (STG) durch die Prismen (6,7) um einem Knickwinkel (β) gekippt wird,
- das zweite Prisma (7) eine Kompensation der Wirkung des ersten Prismas (7) bezüglich Koma und Farbquerfehler, nicht aber bezüglich der Kippung des Zwischenbildes bewirkt,
- der Knickwinkel (β) nur durch die Ablenkwinkel der Prismen (6, 7), nicht aber durch eine axialen Position der Prismen (6, 7) längs der optische Achse (STG) oder deren axialen Abstand festgelegt ist, und
- der Abstand der Prismen (6, 7) zueinander und der Abstand der Prismenanordnung (5) zur Zwischenbildebene (O') so gewählt sind, dass bei der Kippung des Zwischenbildes kein Koma und Farbquerfehler erzeugt werden.

2. Mikroskopsystem nach Anspruch 1, **dadurch gekennzeichnet, dass** der Knickwinkel (β) 4,5 Grad beträgt und der Kippwinkel (α) 8 Grad.

## Claims

1. Microscope system, comprising
- a microscope (M) having an objective (1) and a tube lens (2) for imaging an object from an object plane (O) along an optical axis (STG) into an intermediate image located in an intermediate image plane (O'),
- an imaging module (BM),
- which has a spinning disk structure element (3) with transmissive structures, is arranged at the location of the intermediate image plane (O') and is arranged at a tilt angle (α) with respect to the perpendicular of the beam path (STG),
- which is embodied for steering illumination light through the spinning disk structure element (3) to produce an image (3') of the spinning disk structure element (3) in the object plane (O), and
- which is embodied for capturing transmitted sample light (4a) that is transmitted at the transmissive structures of the spinning disk structure element (3), wherein the sample light (4a) is illumination radiation reflected at the object or is fluorescent radiation brought about by the illumination radiation, and
- a prism arrangement (5) arranged between the tube lens (2) and the spinning disk structure element (3),
**characterized in that**
- the spinning disk structure element (3) has reflective structures and therefore acts as a beam splitter,
- the imaging module (BM) is embodied for capturing reflected sample light (4) that is reflected at the reflective structures of the spinning disk structure element (3),
- the prism arrangement (5) is arranged between the tube lens (2) and the spinning disk structure element (3) and tilts the intermediate image onto the plane of the structure element (3) and is arranged between the tube lens (2) and the spinning disk structure element (3) such that the reflected sample light (4) is capturable in the imaging module (BM) using the structure element (3) acting as a beam splitter,
- the prism arrangement (5) comprises a first prism (6) and a second prism (7), wherein the optical axis (SGT) is tilted at a kink angle (β) by the prisms (6, 7),
- the second prism (7) effects compensation of the effect of the first prism (7) with respect to coma and lateral chromatic aberration, but not with respect to the tilting of the intermediate image,
- the kink angle (β) is determined only by the deflection angles of the prisms (6, 7), but not by an axial position of the prisms (6, 7) along the optical axis (SGT) or the axial distance thereof, and
- the distance between the prisms (6, 7) and the distance of the prism arrangement (5) from the intermediate image plane (O') are selected such that, upon tilting of the intermediate image, no coma or lateral chromatic error are produced.

2. Microscope system according to Claim 1, **characterized in that** the kink angle (β) is 4.5 degrees and the tilt angle (α) is 8 degrees.

## Revendications

1. Système de microscope comprenant
- un microscope (M) comprenant un objectif (1) et une lentille tubulaire (2) servant à représenter un objet depuis un plan d'objet (O) le long d'un axe optique (STG) dans une image intermédiaire qui se trouve dans un plan d'image intermédiaire (O'),
- un module d'imagerie (BM),
- qui possède un élément structural à disque en rotation (3) comprenant des structures à transmission, lequel est disposé à l'endroit du plan d'image intermédiaire (O') et est posé sous un angle d'inclinaison (□) donné par rapport à la verticale du trajet du rayon (STG),
- qui est configuré pour diriger la lumière d'éclairage à travers l'élément structural à disque en rotation (3) afin de générer dans le plan d'objet (O) une image (3') de l'élément structural à disque en rotation (3) et
- qui est configuré pour détecter la lumière d'échantillon (4a) qui est transmise au niveau des structures à transmission de l'élément structural à disque en rotation (3), la lumière d'échantillon (4a) étant un rayonnement d'éclairage réfléchi sur l'objet ou un rayonnement de fluorescence produit par le rayonnement d'éclairage, et
- un arrangement de prismes (5) disposé entre la lentille tubulaire (2) et l'élément structural à disque en rotation (3),
**caractérisé en ce que**
- l'élément structural à disque en rotation (3) possède des structures réfléchissantes de sorte qu'il agit comme un diviseur de faisceaux,
- le module d'imagerie (BM) est configuré pour détecter la lumière d'échantillon (4) réfléchie qui est réfléchie sur les structures réfléchissantes de l'élément structural à disque en rotation (3),
- l'arrangement de prismes (5) est disposé entre la lentille tubulaire (2) et l'élément structural à disque en rotation (3) et l'image intermédiaire est inclinée sur le plan de l'élément structural (3) et est disposée entre la lentille tubulaire (2) et l'élément structural à disque en rotation (3) de telle sorte que la lumière d'échantillon (4) réfléchie peut être détectée dans le module d'imagerie (BM) au moyen de l'élément structural (3) qui agit comme un diviseur de faisceaux,
- l'arrangement de prismes (5) comporte un premier prisme (6) et un deuxième prisme (7), l'axe optique (STG) étant incliné par les prismes (6, 7) d'un angle de cassure (β),
- le deuxième prisme (7) produisant une compensation de l'effet du premier prisme (7) concernant la coma et l'aberration chromatique latérale, mais pas concernant l'inclinaison de l'image intermédiaire,
- l'angle de cassure (β) est uniquement défini par l'angle de déviation des prismes (6, 7), mais pas par une position axiale des prismes (6, 7) le long de l'axe optique (STG) ou leur écart axial, et
- l'écart des prismes (6, 7) entre eux et l'écart entre l'arrangement de prismes (5) et le plan d'image intermédiaire (O') sont choisis de telle sorte qu'aucune coma ni aberration chromatique latérale ne sont produites lors de l'inclinaison de l'image intermédiaire.

2. Système de microscope selon la revendication 1, **caractérisé en ce que** l'angle de cassure (β) est de 4,5 degrés et l'angle d'inclinaison (□) de 8 degrés.
